# EUROPÄISCHE PATENTSCHRIFT

(11) **EP 1 510 676 B1**
(45) Veröffentlichungstag und Bekanntmachung des Hinweises auf die Patenterteilung: **07.11.2007**
(21) Anmeldenummer: 03018413.9
(22) Anmeldetag: 13.08.2003
(51) Int. Cl.: F02C 9/16

(54) **Gasturbinenanlage**
Gas turbine plant
Installation de turbine à gaz

(43) Veröffentlichungstag der Anmeldung: 02.03.2005
(73) Patentinhaber: SIEMENS AKTIENGESELLSCHAFT, 80333 München (DE)
(72) Erfinder: Schmid, Udo, 90475 Nürnberg (DE)

(56) Entgegenhaltungen:
- EP-A- 1 128 039
- DE-A- 2 541 715
- US-A- 4 949 544
- US-A- 5 680 752
- TRAUPEL W.: 'Thermische Turbomaschinen, zweiter Band', 1968, SPRINGER VERLAG, BERLIN/HEIDELBERG/ZURICH * Seite 78, Absatz 2 - Seite 80, Absatz 2 *

## Beschreibung

Die Erfindung betrifft eine Gasturbinenanlage mit einem einer Gasturbine zugeordneten Verdichter und mit einem dem Verdichter strömungstechnisch zumindest teilweise parallel geschalteten separaten Turboverdichter.

Die von einer Gasturbinenanlage abgegebene Leistung hängt stark von der aktuellen Umgebungstemperatur ab. Dabei sinkt die abgegebene Leistung mit steigender Umgebungstemperatur, da sich dabei der Verdichtermassenstrom durch die Gasturbine erniedrigt.

Um diesen Leistungsverlust der Gasturbinenanlage mit steigender Umgebungstemperatur auszugleichen, ist es bekannt, die Ansaugluft der Gasturbine beispielsweise durch Verdunstungskühlung abzukühlen. Diese Maßnahme zeigt aber lediglich bei trockener Umgebungsluft und vorzugsweise hohen Umgebungstemperaturen gute Ergebnisse. Des Weiteren erfordert diese Maßnahme einen hohen Wasserverbrauch.

Eine weiterhin bekannte Methode umfasst das Eindüsen von Wasser in den Verdichter der Gasturbine (wet compression). Dabei wird jedoch eine große Menge an vollständig entsalzten Wasser benötigt. Darüber hinaus reduziert sich die Lebensdauer zumindest einiger Komponenten der Gasturbine. In der US 5 680 752 wird zur Leistungssteigerung der Brennkammer zusätzliche verdichtete Luft von einem zweiten Verdichter zugeführt.

Des Weiteren ist es bekannt, Wasser in die Brennkammer der Gasturbine einzudüsen; diese Maßnahme weist jedoch ebenfalls die vorgenannten Nachteile auf und führt weiterhin zu einer deutlichen Wirkungsgradreduzierung.

Die genannten bekannten Maßnahmen zur Leistungserhöhung erfordern zur Erzielung einer gewünschten Leistungssteigerung das Inkaufnehmen teilweise gravierender Nachteile.

Der Erfindung liegt daher die Aufgabe zugrunde, eine Gasturbinenanlage der eingangs genannten Art anzugeben, bei welcher eine Leistungssteigerung auf einfache Weise und ohne gravierende Nachteile für einen Dauerbetrieb der Anlage möglich ist.

Die Aufgabe wird erfindungsgemäß dadurch gelöst, dass mittels des Turboverdichters verdichtete Luft dem Verdichter über von der Gasturbinenanlage umfasste Mittel zur Verdichterluftentnahme zuführbar ist.

Der separate Turboverdichter erhöht dabei den Massenstrom an verdichteter Luft, welcher der Gasturbine zugeführt wird. Dadurch stellt sich im Vergleich zu einer Gasturbinenanlage ohne separaten Turboverdichter eine erhöhte Leistungsabgabe der Gasturbinenanlage ein, wobei der Wirkungsgrad der Gasturbinenanlage sowie deren Lebensdauer nicht beeinträchtigt werden.

Da die Leistungsabgabe einer Gasturbinenanlage mit steigenden Umgebungstemperaturen abnimmt, weil sich der Massenstrom an verdichteter Luft verringert, wird eine erfindungsgemäße Gasturbinenanlage durch die vom Turboverdichter zusätzlich bereitgestellte verdichtete Luft bei einer aktuellen Umgebungstemperatur mit einer Leistungsabgabe betrieben, welche einer kühleren Umgebungstemperatur entspricht.

Der Verdichter der Gasturbine muss die vom Turboverdichter bereitgestellte zusätzliche Luft nicht vom Umgebungsdruck auf den gewünschten Enddruck verdichten, da diese Aufgabe zumindest teilweise der Turboverdichter übernimmt. Dadurch erhöht sich die von der Gasturbine abgegebene Leistung stärker als proportional zur Erhöhung des Massenstroms der verdichteten Luft, die der Turbine zuströmt.

Deshalb ist die Leistungsbilanz einer erfindungsgemäßen Gasturbinenanlage trotz der etwas erhöhten Leistungsaufnahme des Verdichters sowie der erforderlichen Leistung zum Antrieb des Turboverdichters positiv.

Bei vielen Gasturbinenanlagen sind Mittel zur verdichterluftentnahme betriebsbedingt notwendig und daher bereits vorhanden, beispielsweise Abblaseleitungen, Kühlluftleitungen oder Überströmleitungen. Diese Mittel zur Verdichterluftentnahme dienen bei bekannten Gasturbinenanlagen im Wesentlichen entweder zum Druckabbau der Verdichterluft oder zum Ableiten mindestens eines Teils der Verdichterluft, um diese beispielsweise einer Kühlvorrichtung zuzuführen.

Bei dieser Ausführungsform der Erfindung wird die vom Turboverdichter bereitgestellte verdichtete Luft der Gasturbinenanlage über bereits vorhandene Mittel zugeführt, so dass die Grundkonstruktion der Gasturbinenanlage kaum verändert werden muss.

In einer bevorzugten Ausführungsform wird der Turboverdichter von einem Elektromotor angetrieben.

Derartige Antriebe sind wenig störanfällig, leicht und schnell regelbar sowie flexibel einsetzbar.

In einer besonders bevorzugten Ausgestaltung ist die Gasturbinenanlage ausgestaltet als eine Gas- und Dampfkraftanlage.

Bei einer Gas- und Dampfkraftanlage wird die Energie im heißen Abgas der Gasturbine ausgenutzt, um in einem Dampferzeugungsprozess Betriebsdampf für eine Dampfturbine zu erzeugen.

Da sich bei einer erfindungsgemäßen Gasturbinenanlage aufgrund des erhöhten Verdichtermassenstroms auch der Abgasmassenstrom der Gasturbine erhöht, steigt dabei auch die Leistungsabgabe der mit der Gasturbine gekoppelten Dampfturbine. Diese Ausführungsform der Erfindung weist daher eine besonders hohe erzielbare Mehrleistung sowie einen guten Wirkungsgrad auf.

In einer weiteren bevorzugten Ausführungsform umfasst der Turboverdichter mindestens zwei Verdichterstufen.

Dabei ist die Erzielung eines gewünschten Enddrucks für die verdichtete Luft besonders genau und mit gutem Wirkungsgrad möglich.

Bei dieser Ausgestaltung der Erfindung ist es weiterhin vorteilhaft, wenn zwischen zwei der Verdichterstufen ein Zwischenkühler geschaltet ist, welcher bevorzugt als Brennstoffvorwärmer ausgebildet ist.

Bei einem mehrstufigen Verdichter kann die verdichtete Luft nach einer ersten Verdichterstufe entnommen und einem Zwischenkühler zugeführt werden. Bei der Ausbildung des Zwischenkühlers als Brennstoffvorwärmer wird als Kühlmittel ein Brennstoffgemisch für die Gasturbine verwendet, welches sich durch einen Wärmetausch mit der vorverdichteten Luft erwärmt. Dadurch stellen sich mindestens zwei positive Effekte ein:

Zum einen erhöht sich infolge der Zwischenkühlung der vorverdichteten Luft der Verdichtermassenstrom weiter und zum anderen wird die Vorwärmung des Gasturbinenbrennstoffgemisches bewerkstelligt, so dass dafür bislang eingesetzte, bekannte Wärmetauscher entfallen können. Wenn die Vorwärmung des Brennstoffgemischs hinter den Regelventilen für das Brennstoffgemisch erfolgt, dann kann eine Zuführeinrichtung für das Brennstoffgemisch für kaltes Gas ausgelegt und somit kostengünstig realisiert werden.

Weiterhin ist dabei die erforderliche Länge einer Rohrleitung, welche das Brennstoffgemisch zur Brennstoffvorwärmung und von dieser zur Gasturbine führt, reduziert.

Schließlich kann ein bekannter Wasserkreislauf zur Aufwärmung des Brennstoffgemischs inklusive sämtlicher zugehöriger Regelungen entfallen.

Bevorzugt wird der Zwischenkühler mittels einer einem Generator oder einer anderen Komponente der Gasturbinenanlage zugeordneten Kühlmittelversorgung mit Kühlmittel versorgt.

Diese Ausführungsform ist besonders aufwandsarm realisierbar, falls zur Zwischenkühlung der verdichteten Luft des Turboverdichters ein Kühlmittel, beispielsweise Kühlwasser, benötigt wird. Dieses Kühlmittel kann dann von einer meist ohnehin vorhandenen Kühlmittelversorgung beispielsweise für den Generator bezogen werden, wobei diese Kühlvorrichtung oft nur wenige Meter entfernt installiert ist.

In einer weiteren bevorzugten Ausgestaltung wird der Turboverdichter mittels einer der Gasturbine zugeordneten Schmierölversorgung mit Schmieröl versorgt.

Dabei ist die Bereitstellung von Schmieröl für den zuverlässigen und verschleißarmen Lauf des Turboverdichters besonders einfach, da eine vorhandene Schmierölversorgung der Gasturbine genutzt werden kann.

Bevorzugt wird der Turboverdichter während des Betriebs der Gasturbinenanlage mit seiner Nennleistung betrieben.

Der Turboverdichter läuft dabei mit der maximalen Dauerleistung, für welche er ausgelegt ist.

Eine Leistungsregelung für den Turboverdichter kann entfallen, da die Leistungsregelung mittels einer Veränderung der Luftmenge ausschließlich von der Gasturbine übernommen werden kann.

In einer weiteren vorteilhaften Ausgestaltung der Erfindung wird die durch den Turboverdichter verdichtete Luft mittels einer Regelklappe der Gasturbine zugeführt, wobei die Regelklappe gemäß einer Regelcharakteristik geöffnet und geschlossen werden kann.

Die vom Turboverdichter bereitgestellte zusätzliche, verdichtete Verbrennungsluft für die Gasturbine wird der Gasturbine mittels der Regelklappe gemäß einer gewünschten Regelcharakteristik zugeführt, welche beispielsweise ein langsames und gleichmäßiges Zuführen bzw. Wegnehmen der zusätzlichen Verbrennungsluft beim An- und Abfahren des Turboverdichters erlaubt. Bei der Regelcharakteristik kann es sich beispielsweise um ein Steuerungsprogramm für einen Motor handeln, welcher die Regelklappe betätigt.

Der Turboverdichter wird beispielsweise bei geschlossener Regelklappe gestartet. Sobald der Druck vor der Regelklappe größer ist als der Druck stromabwärts des der Gasturbine zugeordneten Verdichters, wird die Regelklappe kontinuierlich aus ihrer geschlossenen Position in ihre vollständig geöffnete Position gebracht. Dieser Öffnungsvorgang kann beispielsweise 60 Sek. dauern. Da sich dabei der Verdichtermassenstrom ausreichend langsam erhöht, kann die Leistungsregelung von der Gasturbine alleine übernommen werden.

Der Turboverdichter kann ferner beispielsweise dadurch außer Betrieb genommen werden, indem die Regelklappe kontinuierlich von ihrer geöffneten Position in ihre geschlossene Position gebracht wird, z.B. innerhalb von 60 Sek. Auch dabei ist die Veränderung des Verdichtermassenstroms ausreichend langsam, so dass die Leistungsregelung von der Gasturbine alleine problemlos über eine Verstellung ihrer Leitschaufeln bewerkstelligt werden kann.

Weiterhin ist es vorteilhaft, wenn die Zufuhr der mittels des Turboverdichters verdichteten Luft zur Gasturbine mittels einer Rückschlagklappe schlagartig unterbrechbar ist.

Im Falle eines Fehlers des Turboverdichters muss die Verbindungsleitung zwischen Gasturbine und Turboverdichter möglichst schnell verschlossen werden, um infolge des auftretenden Druckabfalls im Turboverdichterstrang den Betrieb der Gasturbinenanlage nicht zu gefährden. Deshalb ist bei dieser Ausführungsform die Rückschlagklappe vorgesehen, um die Rückströmung von verdichteter Luft des Gasturbinenverdichters in den Turboverdichter zu verhindern und damit die Verbindungsleitung vom Turboverdichter zur Gasturbine schlagartig, also innerhalb kürzest möglicher Zeit, unterbrechen zu können.

Dabei ist die Rückschlagklappe bevorzugt hydraulisch oder pneumatisch betätigbar.

Eine derartige Betätigung der Rückschlagklappe unterstützt das Schließen dieser Klappe im Fehlerfall des Turboverdichters, so dass der Turboverdichter möglichst rasch von der Gasturbine entkoppelt werden kann.

Im Folgenden werden zwei Ausführungsbeispiele der Erfindung näher dargestellt.

Es zeigten:
- FIG 1: eine erfindungsgemäße Gasturbinenanlage mit einem einer Gasturbine zugeordneten Verdichter sowie einen zweistufigen Turboverdichter, der mit dem Verdichter vollständig parallel geschaltet ist, und
- FIG 2: eine weitere erfindungsgemäße Gasturbinenanlage, wobei der Turboverdichter dem Verdichter strömungstechnisch teilweise parallel geschaltet ist.

In der Figur ist eine erfindungsgemäße Gasturbineanlage 1 dargestellt.

Sie umfasst einen Verdichter 9, welcher zusammen mit einer Gasturbine 5 sowie einem Generator 11 auf einer gemeinsamen Welle angeordnet ist.

Mittels der Gasturbine 5 wird die in einem gasförmigen Brennstoff enthaltene Energie umgewandelt in Rotationsenergie zum Antrieb des Generators 11.

Die Verbrennung des gasförmigen Brennstoffs in einer Brennkammer 25 erfordert die Zugabe von Luft 31, welche zur Erhöhung der Effizienz der Verbrennung mittels des Verdichters 9 verdichtet und danach in die Brennkammer 25 eingeleitet wird.

Die Luft 31 wird mittels eines Ansaugers 7 (Ansaughaus) angesaugt und dem Verdichter 9 zugeführt.

Parallel zum Verdichter 9 ist bei der Gasturbinenanlage 1 ein Turboverdichter 13 angeordnet, welcher ebenfalls mit Luft 31 beaufschlagt wird.

Der Turboverdichter 13 umfasst eine erste Verdichterstufe 15 sowie eine zweite Verdichterstufe 17.

Der Antrieb des Turboverdichters 13 erfolgt mittels eines Elektromotors 19.

Nach Verdichtung der Luft 31 mittels der ersten Verdichterstufe 15 wird die entsprechend vorverdichtete Luft einem Brennstoffvorwärmer 21 zugeführt und danach in die zweite Verdichterstufe 17 eingebracht zur fortgesetzten Verdichtung der Luft 31 auf einen gewünschten Enddruck.

Die derart durch den Turboverdichter 13 verdichtete Luft 31 wird nach Verlassen des Turboverdichters 13 mittels einer Regelklappe 27 der Gasturbine 5, insbesondere deren Brennkammer 25, zugeführt.

Die Regelklappe 27 wird von einem Motor 33 entsprechend einer Regelcharakteristik betätigt.

Insbesondere während des Anfahrens und Abfahrens des Turboverdichters 13 wird die Regelklappe 27 kontinuierlich geöffnet bzw. geschlossen. Während des Betriebs der Gasturbinenanlage 1 befindet sich die Regelklappe 27 in der Regel in einer konstanten Öffnungsposition.

Um im Falle eines Ausfalls des Turboverdichters 13 die Luftrückströmung von der Gasturbine 5 möglichst schnell unterbrechen zu können, ist eine Rückschlagsklappe 29 vorgesehen. Diese Rückschlagklappe 29 wird in diesem Falle schlagartig in eine geschlossene Position gebracht.

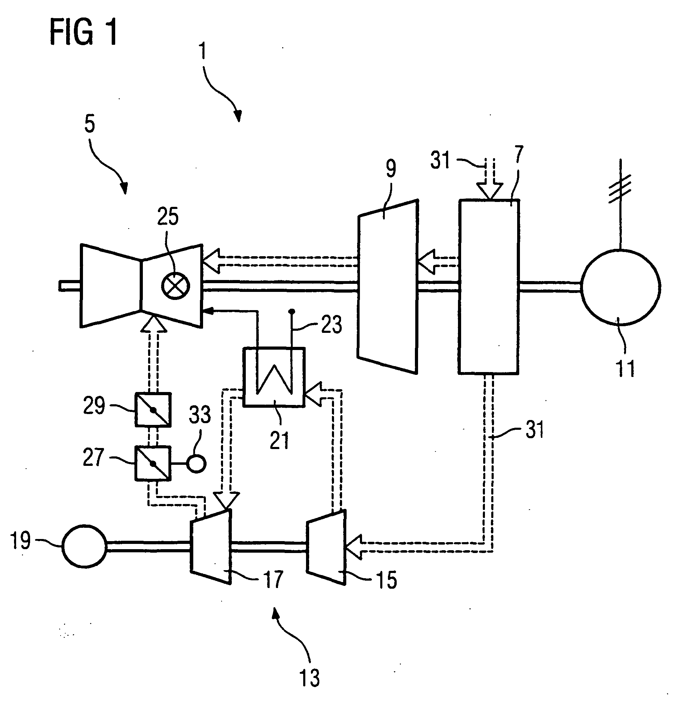

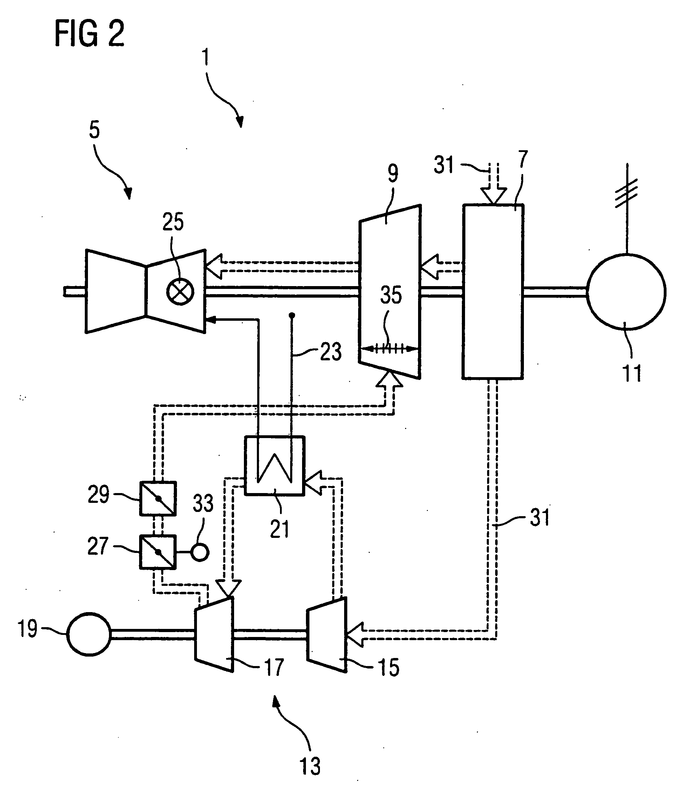

FIG 2 zeigt eine weitere Ausführungsform der Erfindung. Im Unterschied zu FIG 1 ist dabei der Turboverdichter 13 dem Verdichter 9 strömungstechnisch nur teilweise parallel geschaltet. Durch den Turboverdichter 13 verdichtete Luft wird dabei dem Verdichter 9 bei einem bestimmten Druckniveau 35 des Verdichters 9 zugeführt. Die weitere Verdichtung auf einen gewünschten Enddruck übernimmt dann der Verdichter 9.

Zusammengefasst lässt sich eine erfindungsgemäße Gasturbinenanlage folgendermaßen beschreiben:

Zur Erhöhung des Verdichtermassenstroms ist bei einer erfindungsgemäßen Gasturbinenanlage ein zum Verdichter der Gasturbine strömungstechnisch zumindest teilweise parallel geschalteter separater Turboverdichter vorgesehen, welcher bevorzugt mittels eines Elektromotors betrieben ist.

Dadurch wird die Gasturbine bei einer aktuellen Umgebungstemperatur entsprechend einer niedrigeren Umgebungstemperatur unter erhöhter Leistungsabgabe betrieben; die dabei von der Gasturbine abgegebene Leistung entspricht derjenigen Leistung einer herkömmlichen Gasturbinenanlage bei kälterer Umgebungstemperatur.

## Patentansprüche

1. Gasturbinenanlage (1) mit einem einer Gasturbine (5) zugeordneten Verdichter (9) und mit einem dem Verdichter (9) strömungstechnisch zumindest teilweise parallel geschalteten separaten Turboverdichter (13),
**dadurch gekennzeichnet, dass**
mittels des Turboverdichters (13) verdichtete Luft (31) dem Verdichter (9) über von der Gasturbinenanlage (1) umfasste Mittel zur Verdichterluftentnahme zuführbar ist.

2. Gasturbinenanlage (1) nach Anspruch 1,
**dadurch gekennzeichnet, dass**
der Turboverdichter (13) von einem Elektromotor (19) antreibbar ist.

3. Gasturbinenanlage (1) nach Anspruch 1 oder 2,
**dadurch gekennzeichnet, dass**
die Mittel zur Verdichterluftentnahme mindestens eine Komponente aus der Gruppe {Abblaseleitung, Kühlluftleitung, Überströmleitung} umfassen.

4. Gasturbinenanlage (1) nach einem der Ansprüche 1 bis 3, wobei die Gasturbinenanlage (1) als eine Gas- und Dampfkraftanlage ausgebildet ist.

5. Gasturbinenanlage (1) nach einem der Ansprüche 1 bis 4,
**dadurch gekennzeichnet, dass**
der Turboverdichter (13) mindestens zwei Verdichterstufen (15, 17) umfasst.

6. Gasturbinenanlage (1) nach Anspruch 5,
**gekennzeichnet durch**
einen zwischen zwei der Verdichterstufen (15, 17) geschalteten Zwischenkühler.

7. Gasturbinenanlage nach Anspruch 6,
**dadurch gekennzeichnet, dass**
der Zwischenkühler als Brennstoffvorwärmer (21) ausgebildet ist.

8. Gasturbinenanlage nach Anspruch 6 oder 7,
**dadurch gekennzeichnet, dass**
der Zwischenkühler mittels einer einem Generator (11) oder einer anderen Komponente der Gasturbinenanlage (1) zugeordneten Kühlmittelversorgung mit Kühlmittel versorgbar ist.

9. Gasturbinenanlage (1) nach einem der Ansprüche 1 bis 8,
**dadurch gekennzeichnet, dass**
der Turboverdichter (13) mittels einer der Gasturbine zugeordneten Schmierölversorgung mit Schmieröl versorgbar ist.

10. Gasturbinenanlage (1) nach einem der Ansprüche 1 bis 9,
**dadurch gekennzeichnet, dass**
der Turboverdichter (13) während des Betriebs der Gasturbinenanlage (1) mit seiner Nennleistung betrieben ist.

11. Gasturbinenanlage (1) nach einem der Ansprüche 1 bis 10,
**dadurch gekennzeichnet, dass**
die mittels des Turboverdichters (13) verdichtete Luft (31) mittels einer Regelklappe (27) der Gasturbine (5) zuführbar ist, wobei die Regelklappe (27) gemäß einer Regelcharakteristik geöffnet und geschlossen werden kann.

12. Gasturbinenanlage (1) nach einem der Ansprüche 1 bis 11,
**dadurch gekennzeichnet, dass**
eine Rückströmung der mittels des Verdichters (9) verdichteten Luft (31) zum Turboverdichter (13) mittels einer Rückschlagklappe (29) schlagartig unterbrechbar ist.

13. Gasturbinenanlage (1) nach Anspruch 12,
**dadurch gekennzeichnet, dass**
die Rückschlagklappe (29) hydraulisch oder pneumatisch betätigbar ist.

## Claims

1. A gas-turbine installation (1) comprising a compressor (9) assigned to a gas-turbine (5) and a separate turbo-compressor (13) which, in terms of flow engineering, is connected to the compressor at least partially in parallel,
**characterised in that**
the turbo-compressor (13) can feed compressed air (31) to the compressor (9) via means for removing compressor air comprised by the gas-turbine installation (1).

2. A gas-turbine installation (1) according to claim 1,
**characterised in that**
the turbo-compressor (13) can be driven by an electric motor (19).

3. A gas-turbine installation (1) according to claim 1 or 2,
**characterised in that**
the means for removing compressor air comprises at least one component from the group {blow-off line, cooling-air line, overflow line}.

4. A gas-turbine installation (1) according to any one of claims 1 to 3,
wherein the gas-turbine installation (1) is fashioned as a gas and steam power installation.

5. A gas-turbine installation (1) according to one of claims 1 to 4,
**characterised in that**
the turbo-compressor (13) comprises at least two compressor stages (15,17).

6. A gas-turbine installation (1) according to claim 5,
**characterised by**
an intercooler connected between two of the compressor stages (15,17).

7. A gas-turbine installation according to Claim 6,
**characterised in that**
the intercooler is fashioned as a fuel preheater (21).

8. A gas-turbine installation according to Claim 6 or 7,
**characterised in that**
the intercooler can be supplied with coolant by means of a coolant supply assigned to a generator (11) or to another component of the gas-turbine installation (1).

9. A gas-turbine installation (1) according to any one of Claims 1 to 9,
**characterised in that**
the turbo-compressor (13) can be supplied with lubricating oil by means of a lubricating-oil supply assigned to the gas-turbine.

10. A gas-turbine installation (1) according to any one of Claims 1 to 10,
**characterised in that**
the turbo-compressor (13) is operated at its nominal power during operation of the gas-turbine installation (1).

11. A gas-turbine installation (1) according to any one of Claims 1 to 11,
**characterised in that**
the air (31) compressed by means of the turbo-compressor (13) can be fed by means of a control valve (27) to the gas-turbine (5), whereby the control valve (27) can be opened and closed according to a control characteristic.

12. A gas-turbine installation (1) according to any one of Claims 1 to 12,
**characterised in that**
a return flow of the air (31) compressed by means of the compressor (9) to the turbo-compressor (13) can be interrupted abruptly by means of a non-return valve (29).

13. A gas-turbine installation (1) according to Claim 13,
**characterised in that**
the non-return valve (29) can be actuated hydraulically or pneumatically.

## Revendications

1. Installation (1) de turbine à gaz, comprenant un compresseur (9) associé à une turbine (5) à gaz et un turbocompresseur (13) distinct, monté au moins partiellement en parallèle, du point de vue de la technique d'écoulement, du compresseur,
**caractérisée**
**en ce que** de l'air (31) comprimé au moyen du turbocompresseur (13) peut être envoyé, pour prélever de l'air du compresseur, au compresseur (9) par des moyens englobés par l'installation (1) de turbine à gaz.

2. Installation (1) de turbine à gaz suivant la revendication 1,
**caractérisée**
**en ce que** le turbocompresseur (13) peut être entraîné par un moteur (19) électrique.

3. Installation (1) de turbine à gaz suivant la revendication 1 ou 2,
**caractérisée**
**en ce que** les moyens de prélèvement d'air au compresseur comprennent au moins un élément choisi dans le groupe {conduit d'évacuation, conduit d'air de refroidissement, conduit de débordement}.

4. Installation (1) de turbine à gaz suivant l'une quelconque des revendications 1 à 3, dans laquelle l'installation (1) de turbine à gaz est constituée sous la forme d'une centrale électrique à gaz et à vapeur.

5. Installation (1) de turbine à gaz suivant l'une quelconque des revendications 1 à 4,
**caractérisée**
**en ce que** le compresseur (13) comprend au moins deux étages (15, 17) de compresseur.

6. Installation (1) de turbine à gaz suivant la revendication 5,
**caractérisée par** un refroidisseur intermédiaire monté entre deux des étages (15, 17) de compresseur.

7. Installation de turbine à gaz suivant la revendication 6,
**caractérisée en ce que** le refroidisseur intermédiaire est constitué sous la forme d'un pré-chauffeur (21) de combustible.

8. Installation de turbine à gaz suivant la revendication 6 ou 7,
**caractérisée en ce que** le refroidisseur intermédiaire peut être alimenté en fluide de refroidissement au moyen d'une alimentation en fluide de refroidissement associée à une génératrice (11) ou à un autre élément de l'installation (1) de turbine à gaz.

9. Installation (1) de turbine à gaz suivant l'une quelconque des revendications 1 à 8,
**caractérisée en ce que** le turbocompresseur (13)peut être alimenté en huile lubrifiante au moyen d'une alimentation en huile lubrifiante associée à la turbine à gaz.

10. Installation (1) de turbine à gaz suivant l'une quelconque des revendications 1 à 9,
**caractérisée en ce que** le turbocompresseur (13) fonctionne à sa puissance nominale pendant le fonctionnement de l'installation (1) de turbine à gaz.

11. Installation (1) de turbine à gaz suivant l'une quelconque des revendications 1 à 10,
**caractérisée en ce que** l'air (31) comprimé au moyen du turbocompresseur (13) peut être envoyé à la turbine (5) à gaz au moyen d'un volet (27) de régulation, le volet (27) de régulation pouvant être ouvert et fermé suivant une caractéristique de régulation.

12. Installation (1) de turbine à gaz suivant l'une quelconque des revendications 1 à 11,
**caractérisée en ce qu'**un courant de retour de l'air (31) comprimé au moyen du compresseur (9) et allant au turbocompresseur (13) peut être interrompu brusquement au moyen d'un clapet (29) anti-retour.

13. Installation (1) de turbine à gaz suivant la revendications 12,
**caractérisée en ce que** le clapet (29) anti-retour peut fonctionner hydrauliquement ou pneumatiquement.
